# EUROPEAN PATENT SPECIFICATION

(11) **EP 3 140 180 B1**
(45) Date of publication and mention of the grant of the patent: **18.03.2020**
(21) Application number: 15732045.8
(22) Date of filing: 06.05.2015
(51) Int. Cl.: B62H 5/00, B62H 5/14

(54) **ANTITHEFT DEVICE INTEGRATED IN THE FRAME OF A BICYCLE**
IN DEN RAHMEN EINES FAHRRADS INTEGRIERTE DIEBSTAHLSCHUTZVORRICHTUNG
DISPOSITIF ANTIVOL INTEGRÉ DANS LE CADRE D'UNE BICYCLETTE

(30) Priority: 06.05.2014 IT MI20140160
(43) Date of publication of application: 15.03.2017
(73) Proprietor: Caldiroli, Matteo Diego, 20143 Milano (IT)
(72) Inventor: Caldiroli, Matteo Diego, 20143 Milano (IT)
(74) Representative: Trupiano, Federica
(86) International application number: PCT/IB2015/053301
(87) International publication number: WO 2015/170263

(56) References cited:
- EP-A1- 0 614 798
- DE-A1- 19 523 558
- DE-A1-102004 009 607
- DE-C1- 19 528 569
- DE-U1-202013 006 253
- NL-C2- 1 029 700
- US-A1- 2014 000 322
- US-B1- 6 505 846

## Description

The present invention regards the sector of bicycle frames with an antitheft device.

In greater detail, the present invention relates to an antitheft device comprised in a frame for bicycles, constructionally integrated in the frame thereof.

In order to prevent unattended bicycles from being stolen, it is customary to secure them to unmovable structures (bicycle racks, vertical road traffic signs, lamp posts, railings, etc.) using metal chains or flexible metal cables, provided with locking means (padlocks, etc.). In the absence of adequate structures, such antitheft chains or cables are also used to secure together a number of bicycles, or else to block their rear wheels.

In order to be constantly available for possible use, the above antitheft chains or cables are normally carried on the bicycles themselves on which they are to be applied to prevent them from being stolen, directly secured to the frame of said bicycles or else kept inside purposely designed containers applied on the bicycles (bags, cases, etc.).

Use of the above antitheft chains or cables presents some major drawbacks, chiefly deriving from the aforementioned need to be carried on the bicycles themselves on which they are to be applied to prevent them from being stolen.

In the case where the antitheft chains or cables are carried directly on the frame of the bicycles, they may, in fact, hinder regular pedalling, potentially nullifying the physiological benefits normally deriving from this activity.

In the case where the antitheft chains or cables are carried inside purposely designed containers (bags, cases, etc.), they may instead require purchase of said containers, with consequent inevitable increase of the overall costs of bicycles, as well as a consequent negative alteration of the aesthetic characteristics thereof. The document DE 10 2004 009607 A1 discloses a bicycle frame comprising and anti-theft device according to the preamble of claim 1.

Hence, a purpose of the present invention is to overcome the drawbacks described above.

The purpose of the present invention is achieved by an antitheft device comprised in a frame for bicycles, constructionally integrated in the frame thereof, according to the main Claim 1.

Further characteristics of the present invention are moreover specified in the dependent claims.

The present invention affords the following important advantages:
- it makes it possible to provide an antitheft device for bicycles, constructionally integrated in the frame thereof;
- it makes it possible to provide an antitheft device for bicycles that does not hinder the normal pedalling activity;
- it makes it possible to provide an antitheft device for bicycles that does not alter the aesthetic characteristics thereof; and
- it makes it possible to provide an antitheft device for bicycles that does not require purchase of purposely designed containers.

The present invention is described in what follows with reference to one embodiment thereof represented in the attached plates of drawings, which are provided by way of non-limiting example and in which:
- Figures 1 and 2 show, respectively in lateral plan view and in top plan view, the structural conformation of an antitheft device for bicycles, according to the invention;
- Figures 3 and 4 show, respectively in lateral plan view and in top plan view, an antitheft device for bicycles, according to the invention, in its resting condition; and
- Figures 5 and 6 show, respectively in lateral plan view and in top plan view, an antitheft device for bicycles, according to the invention, in use.

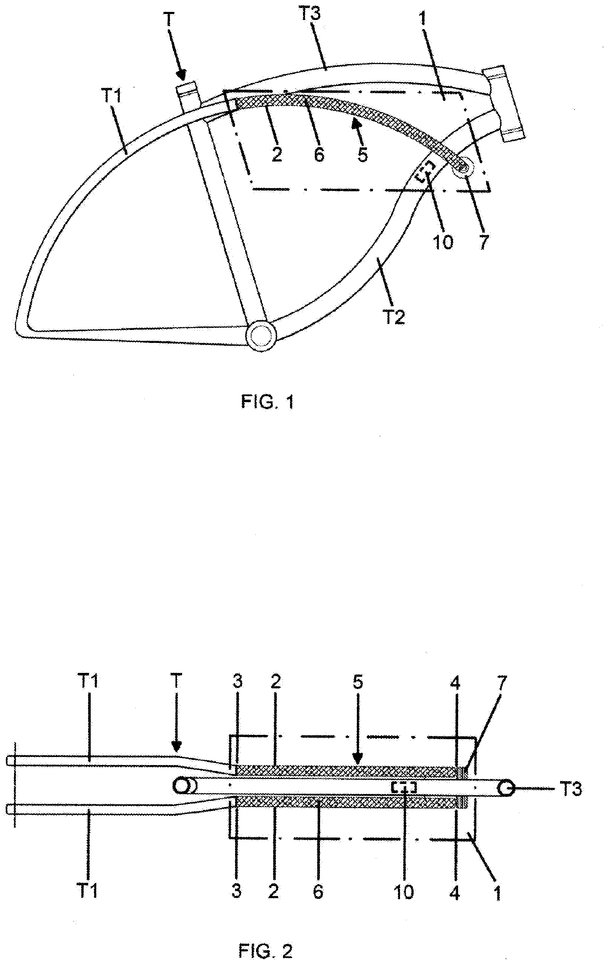

With reference to the attached Figures 1 and 2, an antitheft device 1 for bicycles B, according to the invention, is substantially made up of:
- a pair of flexible cables 2, fixed with respect to the frame T of a bicycle B, which are designed to enable anchorage of said bicycle B to unmovable structures S, such as bicycle racks, vertical road traffic signs, road lamps, railings, etc.;
- a means 7, designed to enable reversible blocking of said flexible cables 2 around said unmovable structures S; and
- a chip 10, contained within the frame T of the bicycle B, designed to enable identification and satellite location thereof.

The flexible cables 2 of the antitheft device 1 are made of high-strength metal materials (preferably steel) and have a cross section of approximately 8 mm, in such a way as to prevent, or render in any case extremely problematical, tampering therewith by cutting them.

The flexible cables 2 have rear ends 3 irreversibly connected to the seat stays T1 of the frame T of the bicycle B, by means of welding processes or by purposely provided coupling joints (not illustrated).

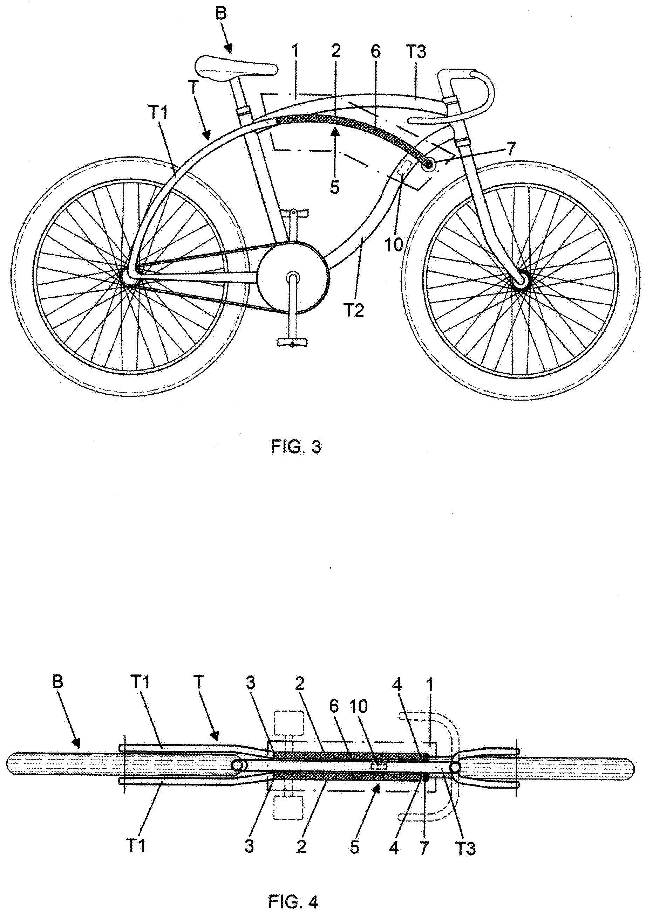

The flexible cables 2 constitute a front prolongation of the seat stays T1 of the frame T and, when they are not in use, they can be blocked around the down tube T2 of said frame T, with the purposely provided means 7, in such a way as to constitute an element 5, comprised in the structure of the frame T itself and designed to complete the profile thereof, as may be noted from the attached Figures 1, 2, 3, and 4.

The flexible cables 2 can thus be carried as an element 5, forming part of the frame T itself, without requiring purchase of purposely designed containers that can be applied on the bicycle B.

The flexible cables 2 have a protective coating 6, made of rubber or flexible plastic, having the same colouring, decorations, or surface finish as those present on the frame T of the bicycle B in such a way as to render said element 5 perfectly integrated with the aesthetic and/or chromatic characteristics of said frame T and of the bicycle B itself.

The means 7 for blocking together the flexible cables 2 of the antitheft device 1 has a structure of an anti-tamper and anti-drill type and is made up of a pair of terminals 8, 9, of the male/female type, which can be coupled together, irreversibly connected to the free front ends 4 of the aforementioned flexible cables 2 using welding processes or purposely provided coupling joints (not illustrated).

The above terminals 8, 9 comprise a release mechanism (not illustrated), of the encoded-key type or else of the numeric-combination type, designed to enable temporary uncoupling thereof in the various conditions of use. The encoded key, or the numeric combination, for activating said release mechanism corresponds uniquely to the antitheft device 1 integrated in the frame T of the bicycle B.

The chip 10 of the antitheft device 1 is constructionally inserted within the frame T of the bicycle B, during assembly thereof, and is designed to contain, in an adequately encoded form:
- the serial number of the frame T of the bicycle B;
- the key code of the encoded key for actuation of the mechanism for releasing the terminals 8, 9 of the means 7 for blocking the flexible cables 2 of the antitheft device 1; and
- the numeric combination for activation of the mechanism for releasing the terminals 8, 9 of the means 7 for blocking the flexible cables 2 of the antitheft device 1.

Operation of an antitheft device 1 for bicycles B, according to the invention, can be summarized as follows.

When the bicycle B is moving, the flexible cables 2 of the antitheft device 1 can be stably blocked around the down tube T2 of the frame T thereof, by mutual coupling of the terminals 8, 9 of the means 7, which are fixed with respect to the flexible cables, in such a way as to constitute an element 5, which is comprised in the structure of the frame T itself and is designed to complete the profile thereof, as may be noted from the attached Figures 1, 2, 3, and 4.

The element 5 is set between the seat stays T1 and the down tube T2 of said frame T, as well as underneath the top tube T3 thereof, and consequently does not interfere in any way with the regular pedalling activity performed by the rider of the bicycle B.

The element 5 moreover has the same colouring, decorations, and surface finish as those present on the frame T of the bicycle B, and consequently does not alter in any way the aesthetic and/or chromatic characteristics of said frame T and of the bicycle B itself.

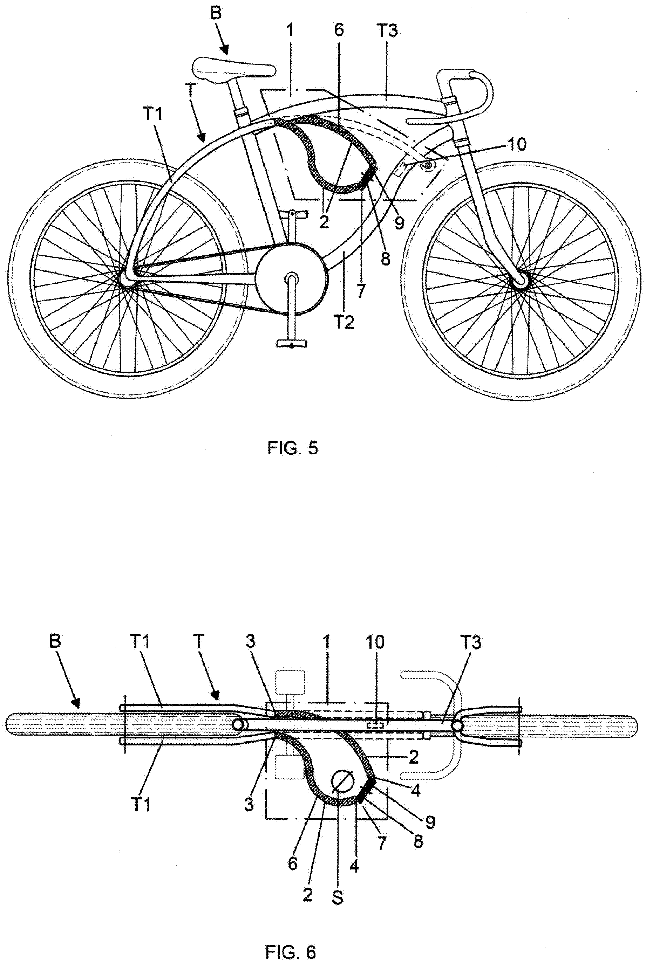

When the bicycle B is parked, the flexible cables 2 of the antitheft device 1 can be released from the down tube T2 of the frame T of the bicycle B, by temporary uncoupling of the terminals 8, 9 of the means 7, and be blocked, by recoupling said terminals 8, 9, around an unmovable structure S, such as a bicycle rack, a vertical road traffic sign, a lamp post, etc., as may be noted from the attached Figures 5 and 6. Temporary uncoupling of the terminals 8, 9 of the means 7 for blocking the flexible cables 2 is rendered possible by the mechanism for release thereof, which can be activated exclusively by a purposely provided encoded key or else by a purposely provided numeric combination.

The flexible cables 2 are structurally fixed with respect to the seat stays T1 of the frame T of the bicycle B, and are moreover made of high-strength metal materials, and consequently enable a secure anchorage of the bicycle B to the aforementioned structure S.

The flexible cables 2 can obviously be used also for anchoring together a number of bicycles B, or else for blocking the respective rear wheels.

In the case where a thief were to manage (with extreme difficulty) to cut the flexible cables 2 of the antitheft device 1, he would find himself with a bicycle B that is irremediably damaged, and therefore is practically of no value in so far as said flexible cables 2 are structurally fixed with respect to the seat stays T1 of the frame T of the bicycle B and consequently cannot be replaced or repaired.

In the case where a thief were to manage (once more with extreme difficulty) to hamper with the means 7 for blocking the flexible cables 2 of the antitheft device 1, he would instead find himself with a bicycle B markedly limited in its use, and in any case of practically no value in so far as it is without the encoded key for actuation of the mechanism for releasing the terminals 8, 9 of said means 7, it being possible to reproduce said key exclusively by means of the key code that only the owner of the bicycle B possesses, or else in so far as it is without the numeric combination for activation of the mechanism for releasing said terminals 8, 9 of said means 7, which is also possessed just by the owner of the bicycle B.

What has been described above, which is evident to a possible thief, represents an important deterrent for theft of a bicycle B comprising an antitheft device 1 constructionally integrated in the frame T thereof.

In the case where a possible thief were in any case to steal a bicycle B comprising an antitheft device 1, the purposely provided chip 10 of said antitheft device 1 would enable identification and satellite location thereof (by means of systems already used in the automotive field) and consequent retrieval by the police.

Identification and location of the specific bicycle B stolen will be obtained through detection of the serial number of the frame T thereof, transmitted by the chip 10 to the relevant satellite detection system.

The above chip 10 may contain, if need be, also the key code of the encoded key for activation of the mechanism for releasing the terminals 8, 9 of the means 7 for blocking the flexible cables 2 of the antitheft device 1, or else the numeric combination for activation of said release mechanism.

Retrieval of the above information, which can be carried out exclusively by authorized staff, who are in possession of apparatuses designed to access correctly said chip 10, will enable authorized duplication of the aforementioned encoded key in the case where the original key is not functioning properly or has been mislaid, or authorized actuation of the mechanism for releasing the terminals 8, 9 of the means 7 for blocking the flexible cables 2 of the antitheft device 1, in the case where the original numeric combination has been forgotten or has got lost.

## Claims

1. A bicycle frame (T) comprising an antitheft device (1) integrated in the frame (T) of the bicycle (B), wherein said antitheft device (1) comprises:
- a pair of flexible cables (2) fixed with respect to the frame T of a bicycle B, and
- a means (7) for blocking said flexible cables (2),
wherein said flexible cables (2) and said blocking means (7) are designed to co-operate together to bring about anchorage of the bicycle (B) to an unmovable structure (S), when it is parked, and wherein said flexible cables (2) can be blocked around a down tube (T2) of said frame (T) with said blocking means (7) in such a way as to constitute an element (5) comprised in the structure of the frame (T) of the bicycle (B), when the bicycle is moving,
wherein the element (5) of the frame (T) of the bicycle (B) is designed to complete the profile of the frame (T),
**characterized in that** the rear ends (3) of the flexible cables (2) are irreversibly connected to the seat stays (Tl) of the frame (T) of the bicycle (B) by welding or by mechanical-coupling joints and **in that** the flexible cables (2) constitute a front prolongation of the seat stays (T1) of the frame (T) of the bicycle (B).

2. The bicycle frame according to Claim 1, **characterized in that** the flexible cables (2) are made of high-strength metal materials.

3. The bicycle frame according to Claim 1, **characterized in that** the flexible cables (2) comprise a protective coating (6) having the same colouring, and/or decorations, and/or surface finish as those present on the frame (T) of the bicycle (B).

4. The bicycle frame according to Claim 1, **characterized in that** the means (7) for blocking the flexible cables (2) comprises a pair of terminals (8, 9) of the type with reversible mutual coupling.

5. The bicycle frame according to Claim 4, **characterized in that** the terminals (8, 9) of the means (7) comprise a release mechanism, designed to enable temporary uncoupling thereof.

6. The bicycle frame according to Claim 5, **characterized in that** the mechanism for releasing the terminals (8, 9) is designed to be activated by an encoded key or else by a numeric combination.

7. The bicycle frame according to Claim 4, **characterized in that** the terminals (8, 9) of the means (7) are irreversibly connected to the front free ends (4) of the flexible cables (2), by welding or by mechanical-coupling joints.

8. The bicycle frame according to Claim 4, **characterized in that** the terminals (8, 9) of the means (7) enable reversible blocking of the flexible cables (2) around unmovable structures (S), such as bicycle racks, road traffic sign, lamp posts, and the like.

9. The bicycle frame according to Claim 4, **characterized in that** the terminals (8, 9) of the means (7) enable reversible blocking of the flexible cables (2) around the down tube (T2) of the frame (T) of the bicycle (B) and consequent constitution of the element (5) of the frame (T) between the seat stays (Tl) and the down tube (T2) of said frame (T), underneath the top tube (T3) thereof.

10. The bicycle frame according to Claim 1, **characterized in that** it comprises a chip (10), designed to enable identification and satellite location of the bicycle (B).

11. The bicycle frame according to Claim 10, **characterized in that** said chip (10) is contained within the frame (T) of the bicycle (B).

12. The bicycle frame according to Claim 10, **characterized in that** said chip (10) is designed to contain the serial number of frame (T) of the bicycle (B).

13. The bicycle frame according to Claim 10, **characterized in that** said chip (10) is designed to contain the key code of an encoded key, of the type designed to enable actuation of the mechanism for releasing the terminals (8, 9) of the means (7) for blocking the flexible cables (2).

14. The bicycle frame according to Claim 10, **characterized in that** said chip (10) is designed to contain a numeric combination, of the type designed to enable activation of the mechanism for releasing the terminals (8, 9) of the means (7) for blocking the flexible cables (2) .

15. A bicycle (B), **characterized in that** it comprises a bicycle frame (T) according to Claim 1.

## Patentansprüche

1. Ein Fahrradrahmen (T) enthaltend eine Diebstahlsicherungsvorrichtung (1), die in den Rahmen (T) eines Fahrrads (B) integriert ist, wobei die Diebstahlsicherungsvorrichtung (1) umfasst:
- ein Paar flexible Kabel (2), die in Bezug auf den Rahmen (T) eines Fahrrads B befestigt sind; und
- eine Einrichtung (7) zum Befestigen der flexiblen Kabel (2),
wobei die flexiblen Kabel (2) und die Befestigungseinrichtung (7) so ausgelegt sind, dass sie zusammenwirken, um eine Verankerung des Fahrrads (B) an einer unbeweglichen Struktur (S) herbeizuführen, wenn es geparkt ist, und wobei die flexiblen Kabel (2) um ein Unterrohr (T2) des Rahmens (T) mit der Befestigungseinrichtung (7) derart befestigt werden können, dass ein Element (5) gebildet wird, das in der Struktur des Rahmens (T) des Fahrrads (B) enthalten ist, wenn das Fahrrad in Bewegung ist,
wobei das Element (5) des Rahmens (T) des Fahrrads (B) dazu ausgelegt ist, das Profil des Rahmens (T) zu vervollständigen,
**dadurch gekennzeichnet, dass** die hinteren Enden (3) der flexiblen Kabel (2) irreversibel mit den Sitzstreben (T1) des Rahmens (T) des Fahrrads (B) durch Schweißen oder durch mechanische Kopplungsverbindungen verbunden sind und dass die flexiblen Kabel (2) eine vordere Verlängerung der Sitzstreben (T1) des Rahmens (T) des Fahrrads (B) darstellen.

2. Der Fahrradrahmen gemäß Anspruch 1, **dadurch gekennzeichnet, dass** die flexiblen Kabel (2) aus hochfesten Metallmaterialien bestehen.

3. Der Fahrradrahmen gemäß Anspruch 1, **dadurch gekennzeichnet, dass** die flexiblen Kabel (2) eine Schutzbeschichtung (6) mit der gleichen Farbe und/oder Dekoration und/oder Oberflächenbeschaffenheit wie die auf dem Rahmen (T) des Fahrrads (B) vorhandenen aufweisen.

4. Der Fahrradrahmen gemäß Anspruch 1, **dadurch gekennzeichnet, dass** die Einrichtung (7) zum Befestigen der flexiblen Kabel (2) ein Paar von Anschlüssen (8, 9) des Typs mit reversibler gegenseitiger Kopplung umfasst.

5. Der Fahrradrahmen gemäß Anspruch 4, **dadurch gekennzeichnet, dass** die Anschlüsse (8, 9) der Mittel (7) einen Freigabemechanismus aufweisen, der dazu bestimmt ist, deren vorübergehende Entkopplung zu ermöglichen.

6. Der Fahrradrahmen gemäß Anspruch 5, **dadurch gekennzeichnet, dass** der Mechanismus zum Freigeben der Anschlüsse (8, 9) so ausgelegt ist, dass er durch einen codierten Schlüssel oder auch durch eine numerische Kombination aktiviert werden kann.

7. Der Fahrradrahmen gemäß Anspruch 4, **dadurch gekennzeichnet, dass** die Anschlüsse (8, 9) der Mittel (7) irreversibel mit den vorderen freien Enden (4) der flexiblen Kabel (2) durch Schweißen oder durch mechanische Kopplungsverbindungen verbunden sind.

8. Der Fahrradrahmen gemäß Anspruch 4, **dadurch gekennzeichnet, dass** die Anschlüsse (8, 9) der Mittel (7) ein reversibles Befestigen der flexiblen Kabel (2) um unbewegliche Strukturen (S) wie Fahrradträger, Verkehrszeichen, Laternenpfähle und dergleichen ermöglichen.

9. Der Fahrradrahmen gemäß Anspruch 4, **dadurch gekennzeichnet, dass** die Anschlüsse (8, 9) der Mittel (7) ein reversibles Befestigen der flexiblen Kabel (2) um das Unterrohr (T2) des Rahmens (T) des Fahrrads (B) und einen sich daraus ergebenden Aufbau des Elements (5) des Rahmens (T) zwischen den Sitzstreben (T1) und dem Unterrohr (T2) des Rahmens (T) unterhalb des Oberrohrs (T3) davon ermöglichen.

10. Der Fahrradrahmen gemäß Anspruch 1, **dadurch gekennzeichnet, dass** er einen Chip (10) umfasst, der dazu ausgelegt ist, die Identifizierung und Satellitenortung des Fahrrads (B) zu ermöglichen.

11. Der Fahrradrahmen gemäß Anspruch 10, **dadurch gekennzeichnet, dass** der Chip (10) in dem Rahmen (T) des Fahrrads (B) enthalten ist.

12. Der Fahrradrahmen gemäß Anspruch 10, **dadurch gekennzeichnet, dass** der Chip (10) so ausgelegt ist, dass er die Seriennummer des Rahmens (T) des Fahrrads (B) enthält.

13. Der Fahrradrahmen gemäß Anspruch 10, **dadurch gekennzeichnet, dass** der Chip (10) so ausgelegt ist, dass er den Schlüsselcode eines codierten Schlüssels enthält, der so ausgelegt ist, dass er die Betätigung des Mechanismus zum Freigeben der Anschlüsse (8, 9) der Mittel (7) zum Befestigen der flexiblen Kabel (2) ermöglicht.

14. Der Fahrradrahmen gemäß Anspruch 10, **dadurch gekennzeichnet, dass** der Chip (10) eine numerische Kombination des Typs enthält, die die Aktivierung des Mechanismus zum Lösen der Anschlüsse (8, 9) der Mittel (7) zum Befestigen der flexiblen Kabel (2) ermöglicht.

15. Ein Fahrrad (B), **dadurch gekennzeichnet, dass** es einen Fahrradrahmen (T) gemäß Anspruch 1 umfasst.

## Revendications

1. Cadre de bicyclette (T) comprenant un dispositif antivol (1) intégré au cadre (T) de la bicyclette (B), dans lequel ledit dispositif antivol (1) comprend :
- une paire de câbles flexibles (2) fixés par rapport au cadre T d'une bicyclette B, et
- un moyen (7) pour bloquer lesdits câbles flexibles (2),
dans lequel lesdits câbles flexibles (2) et ledit moyen de blocage (7) sont conçus pour coopérer ensemble afin d'assurer l'ancrage de la bicyclette (B) à une structure immobile (S), lorsqu'elle est garée, et dans lequel lesdits câbles flexibles (2) peuvent être bloqués autour d'un tube descendant (T2) dudit cadre (T) avec ledit moyen de blocage (7) de manière à constituer un élément (5) compris dans la structure du cadre (T) de la bicyclette (B), lorsque le bicyclette se déplace,
dans lequel l'élément (5) du cadre (T) de la bicyclette (B) est conçu pour compléter le profil du cadre (T),
**caractérisé en ce que** les extrémités arrière (3) des câbles flexibles (2) sont raccordées de manière irréversible aux haubans (T1) du cadre (T) de la bicyclette (B) par des joints de soudage ou de couplage mécanique et **en ce que** les câbles flexibles (2) constituent un prolongement frontal des haubans (T1) du cadre (T) de la bicyclette (B).

2. Cadre de bicyclette selon la revendication 1, **caractérisé en ce que** les câbles flexibles (2) sont constitués de matériaux métalliques de haute résistance.

3. Cadre de bicyclette selon la revendication 1, **caractérisé en ce que** les câbles flexibles (2) comprennent un revêtement protecteur (6) ayant la même coloration et/ou les mêmes décorations et/ou la même finition de surface que ceux présents sur le cadre (T) de la bicyclette (B).

4. Cadre de bicyclette selon la revendication 1, **caractérisé en ce que** le moyen (7) pour bloquer les câbles flexibles (2) comprend une paire de terminaisons (8, 9) du type à couplage mutuel réversible.

5. Cadre de bicyclette selon la revendication 4, **caractérisé en ce que** les terminaisons (8, 9) du moyen (7) comprennent un mécanisme de libération conçu pour permettre leur désaccouplement temporaire.

6. Cadre de bicyclette selon la revendication 5, **caractérisé en ce que** le mécanisme de libération des terminaisons (8, 9) est conçu pour être activé par une clé codée ou autrement par une combinaison numérique.

7. Cadre de bicyclette selon la revendication 4, **caractérisé en ce que** les terminaisons (8, 9) du moyen (7) sont raccordées de manière irréversible aux extrémités frontales libres (4) des câbles flexibles (2) par des joints de soudage ou de couplage mécanique.

8. Cadre de bicyclette selon la revendication 4, **caractérisé en ce que** les terminaisons (8, 9) du moyen (7) permettent un blocage réversible des câbles flexibles (2) autour de structures immobiles (S), telles que des râteliers pour bicyclettes, un panneau de trafic routier, des poteaux de réverbère, et similaires.

9. Cadre de bicyclette selon la revendication 4, **caractérisé en ce que** les terminaisons (8, 9) du moyen (7) permettent un blocage réversible des câbles flexibles (2) autour du tube descendant (T2) du cadre (T) de la bicyclette (B) et une constitution consécutive de l'élément (5) du cadre (T) entre les haubans (T1) et le tube descendant (T2) dudit cadre (T), en dessous de son tube supérieur (T3).

10. Cadre de bicyclette selon la revendication 1, **caractérisé en ce qu'**il comprend une puce (10) conçue pour permettre une identification et une localisation par satellite de la bicyclette (B).

11. Cadre de bicyclette selon la revendication 10, **caractérisé en ce que** ladite puce (10) est contenue dans le cadre (T) de la bicyclette (B).

12. Cadre de bicyclette selon la revendication 10, **caractérisé en ce que** ladite puce (10) est conçue pour contenir le numéro de série du cadre (T) de la bicyclette (B).

13. Cadre de bicyclette selon la revendication 10, **caractérisé en ce que** ladite puce (10) est conçue pour contenir le code de clé d'une clé codée du type conçu pour permettre un actionnement du mécanisme de libération des terminaisons (8, 9) du moyen (7) pour bloquer les câbles flexibles (2).

14. Cadre de bicyclette selon la revendication 10, **caractérisé en ce que** ladite puce (10) est conçue pour contenir une combinaison numérique du type conçu pour permettre une activation du mécanisme pour libérer les terminaisons (8, 9) du moyen (7) pour bloquer les câbles flexibles (2).

15. Bicyclette (B), **caractérisée en ce qu'**elle comprend un cadre de bicyclette (T) selon la revendication 1.
